# FASCICULE DE BREVET EUROPEEN

(11) **EP 2 983 984 B1**
(45) Date de publication et mention de la délivrance du brevet: **21.10.2020**
(21) Numéro de dépôt: 14718682.9
(22) Date de dépôt: 26.03.2014
(51) Int. Cl.: B64C 1/14

(54) **HUBLOT D'HABILLAGE INTÉRIEUR POLARISABLE COMPRENANT DES ÉLÉMENTS DE COMMANDE**
POLARISIERBARES FENSTER ZUR INNENBESCHNEIDUNG MIT BEDIENELEMENTEN
POLARIZABLE WINDOW FOR INTERIOR TRIMMING INCLUDING CONTROL ELEMENTS

(30) Priorité: 09.04.2013 FR 1353191
(43) Date de publication de la demande: 17.02.2016
(73) Titulaire: Vision Systems Aeronautics, 69530 Brignais (FR)
(72) Inventeur: FIGURA, Georges, F-69530 Brignais (FR); COSTA, Laurent, F-26000 Valence (FR)
(74) Mandataire: Verriest, Philippe
(86) Numéro de dépôt international: PCT/FR2014/050716
(87) Numéro de publication internationale: WO 2014/167204

(56) Documents cités:
- WO-A1-2013/013662
- US-B1- 7 535 614

## Description

La présente invention concerne un hublot d'habillage intérieur comprenant un film polarisable agencé pour faire varier le degré d'occultation de la lumière traversant ledit hublot.

Il est connu d'utiliser un hublot comprenant un film polarisable. Le film polarisable est disposé sur une couche interne du hublot et est agencé pour faire varier le degré d'opacité du hublot. Un tel hublot est présenté dans le document US7535614.

Le degré d'opacité du hublot peut varier de la transparence à l'opacité totale. Pour ce faire le film polarisable comprend au moins une couche conductrice polarisée. Cette couche conductrice polarisée est soumise à une alimentation électrique. La variation de la puissance de l'alimentation électrique engendre la variation du degré d'opacité. Ainsi il est possible de régler l'intensité lumineuse traversant le hublot. Ce système donne satisfaction en ce que le degré d'opacité du hublot peut être ajusté en fonction de la luminosité extérieure.

Toutefois, un tel système comprend également un sous-ensemble de contrôle déporté. Le sous-ensemble de contrôle est agencé pour alimenter électriquement la couche conductrice et faire varier la tension. Le sous-ensemble de contrôle comprend également des organes additionnels comme des boutons de réglage du degré d'opacité.

Ainsi, il apparait difficile de remplacer un hublot existant sans film polarisable par un hublot comprenant un film polarisable. En effet, une structure d'accueil pour hublot destinée à un hublot sans film polarisable, ne comprendra pas forcément suffisamment de place pour l'insertion d'un hublot avec film polarisable.

De plus, bien qu'une structure d'accueil dédiée comprenne un emplacement correspondant au hublot avec film polarisable, le raccordement et la maintenance du sous-ensemble de contrôle déporté peut s'avérer complexe. Notamment, l'accessibilité au sous-ensemble de contrôle peut nécessiter des opérations de maintenance longues, que ce soit pour la réparation d'un élément du sous-ensemble de contrôle ou pour le remplacement dudit sous-ensemble par un sous-ensemble neuf.

La présente invention vise à résoudre tout ou partie des inconvénients mentionnés ci-dessus.

Dans le présent texte, les verbes « raccorder », « connecter », « relier », « alimenter » et leurs dérivés se rapportent à une communication électrique entre deux composants distincts.

A cet effet, la présente invention concerne un hublot d'habillage intérieur formant un panneau comprenant au moins une paroi translucide et au moins un film polarisable rapporté sur la paroi et destiné à modifier le degré d'opacité du panneau.

Le hublot d'habillage intérieur comprend également un dispositif d'application d'une tension au film polarisable, le dispositif d'application de tension comprenant au moins un circuit imprimé pourvu d'une portion flexible, le circuit imprimé et étant relié à un circuit d'alimentation électrique.

Le film polarisable comprend une pluralité de couches superposées présentant au moins deux couches conductrices entourant une couche en matériau polarisable, les couches conductrices étant reliées au dispositif d'application de tension par au moins une piste conductrice.

Le hublot d'habillage intérieur comprend en outre des éléments de commande du dispositif d'application de tension au film polarisable, les éléments de commandes comprenant des touches tactiles agencées pour être contrôlées par l'utilisateur sur une première face extérieure du panneau à travers la première paroi, les touches tactiles étant activées par contact sur une zone de la première face extérieure en regard du bouton tactile.

Selon un aspect de l'invention, le hublot d'habillage intérieur comprend une piste conductrice reliée à une couche conductrice du film polarisable par collage.

Le collage assure une liaison électrique robuste entre la piste conductrice et la couche conductrice.

Selon un aspect de l'invention, le film polarisable comprend un emplacement de connexion présentant une zone de contact appartenant à au moins une couche conductrice.

De préférence, chaque couche conductrice comprend au moins une zone de contact.

Selon un aspect de l'invention, le hublot d'habillage intérieur comprend un premier organe de liaison électrique présentant une forme extérieure complémentaire à l'emplacement de connexion, le premier organe de liaison électrique étant rapporté sur le circuit imprimé.

De préférence, les éléments de commandes comprennent des touches tactiles de type inductif et/ou capacitif.

Selon un aspect de l'invention, les éléments de commandes sont intégrés dans la portion flexible du circuit imprimé.

Selon un aspect de l'invention, le hublot d'habillage intérieur comprend des éléments de signalisation.

Les éléments de signalisation sont destinés à rendre compte de l'état de transparence du film polarisable.

Selon un aspect de l'invention, les éléments de signalisation comprennent des éléments lumineux.

Selon un aspect de l'invention, les éléments lumineux sont pourvus de diodes électroluminescentes.

Selon un aspect de l'invention, les diodes électroluminescentes sont rapportées sur la portion flexible du circuit imprimé.

Selon un aspect de l'invention, la portion flexible du circuit imprimé comprend une unité de traitement agencée pour piloter le réglage du degré d'opacité du panneau.

Selon un aspect de l'invention, la portion flexible du circuit imprimé s'étend en regard de la première face extérieure du panneau.

Selon un aspect de l'invention, une portion du circuit imprimé est disposée au-delà de la zone en regard de la première face extérieure du panneau, ladite portion étant rigide et/ou flexible.

Selon un aspect de l'invention, ladite portion est rigide et comprend le dispositif d'application de tension.

La présente invention concerne également un système de hublot polarisable comprenant une cassette de réception, et un hublot d'habillage intérieur, la cassette de réception comprenant un logement destiné à recevoir au moins une partie du dispositif d'application d'une tension au film polarisable.

Grâce aux dispositions selon l'invention, le hublot constitue un ensemble industrialisable, ne nécessitant pas d'étapes complexe de fabrications, et pouvant formant un ensemble autonome destiné à être intégré à une structure de support et relié à une source d'alimentation électrique.

De toute façon l'invention sera bien comprise à l'aide de la description qui suit en référence au dessin schématique annexé représentant, à titre d'exemple non limitatif, une forme d'exécution de ce hublot.
Figure 1 est une vue en perspective d'une cassette de réception d'un hublot, selon un premier mode de réalisation.
Figure 2 est une vue de face de la cassette de réception du hublot, selon le premier mode de réalisation.
Figure 3 est une vue de côté de la cassette de réception du hublot, selon le premier mode de réalisation.
Figure 4 est une vue de face d'un hublot d'habillage intérieur comprenant un film polarisable, selon le premier mode de réalisation.
Figure 5 est une vue en coupe du hublot d'habillage intérieur comprenant un sous-ensemble de contrôle, selon le premier mode de réalisation.
Figure 6 est une vue en perspective du hublot d'habillage intérieur, selon le premier mode de réalisation.
Figure 7 est une vue en perspective du sous-ensemble de contrôle, selon le premier mode de réalisation.
Figure 8 est une vue en coupe d'un panneau du hublot d'habillage intérieur.
Figure 9 est une vue en coupe d'un film polarisable, selon le premier mode de réalisation.
Figure 10 est un vue en coupe d'un collage d'une piste conductrice à un film polarisable, selon le premier mode de réalisation.
Figure 11 est une vue en coupe du hublot d'habillage intérieur comprenant un sous-ensemble de contrôle, selon un second mode de réalisation.
Figure 12 est une vue de face de la cassette de réception du hublot, selon le second mode de réalisation.

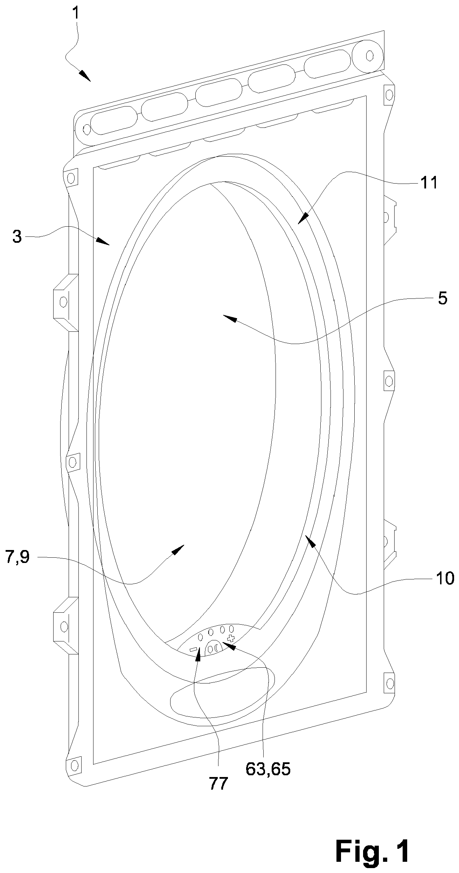

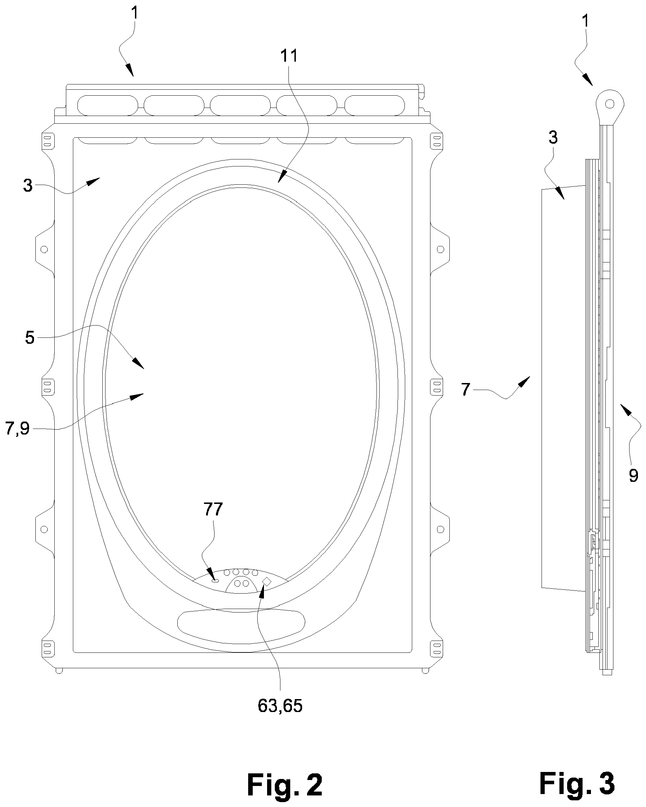

Comme illustré aux figures 1 à 3 et selon le premier mode de réalisation, un système 1 de hublot polarisable pour aéronef comprend une cassette de réception 3 pour hublot. Une ouverture 5 est ménagée dans la cassette de réception 3. Le système 1 comprend également un hublot structurel extérieur 7 et un hublot d'habillage intérieur 9.

Le hublot structurel extérieur 7 est situé du côté de la cassette de réception 3 donnant sur l'extérieur de l'aéronef et le hublot d'habillage intérieur 9 est situé du côté de la cassette de réception 3 donnant sur l'intérieur de l'aéronef. Le hublot structurel extérieur 7 est distant du hublot d'habillage intérieur 9.

Le système 1 comprend en outre un anneau de maintien 11 du hublot d'habillage intérieur 9 dans un logement 10 de la cassette de réception 3. L'anneau de maintien 11 présente une forme correspondant au contour du hublot d'habillage intérieur 9.

L'anneau de maintien 11 est pourvu d'un organe de fixation amovible sur la cassette de réception 3. L'anneau de maintien 11 est agencé pour maintenir en position le hublot d'habillage intérieur 9 lorsque l'organe de fixation amovible solidarise l'anneau de maintien 11 à la cassette de réception 3.

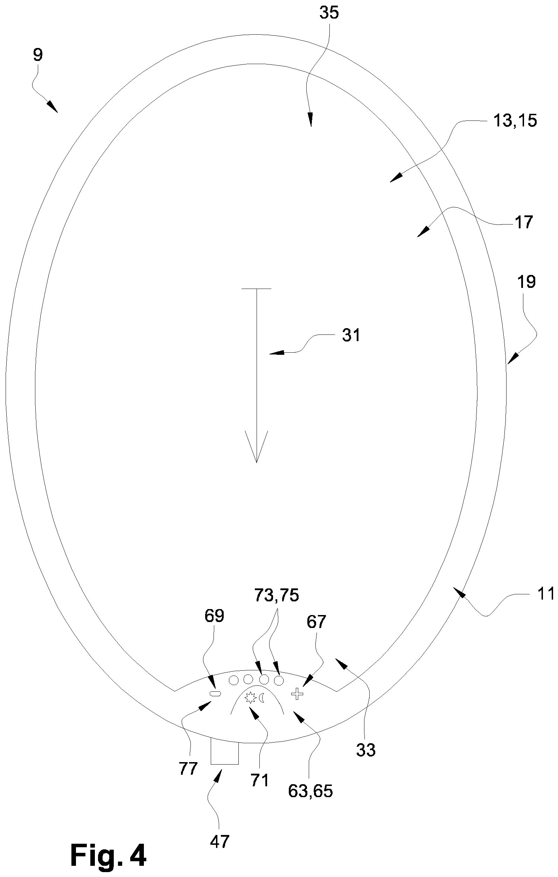

Comme illustré à la figure 4, le hublot d'habillage intérieur 7 comprend un panneau 13. Le panneau 13 est sensiblement plan et présente un contour de forme ovoïde. Le panneau 13 comprend une pluralité de couches et présente une épaisseur résultant de l'empilement desdites couches.

On peut ainsi distinguer une première face extérieure 15 du panneau 13 donnant sur l'intérieur de l'aéronef et une seconde face extérieure du panneau 13 étant en regard du hublot structurel extérieur 7.

Le panneau 13 comprend une pluralité de couches. Le panneau 3 comprend deux parois 17, 19 extrêmes constituées d'un matériau translucide. Selon le mode de réalisation présenté le matériau translucide est un polycarbonate.

Le panneau 13 comprend une couche interne 21 entourée par les parois 17, 19. La couche interne 21 est solidaire des parois 17, 19, la solidarisation étant réalisée par une couche de colle 24 transparente.

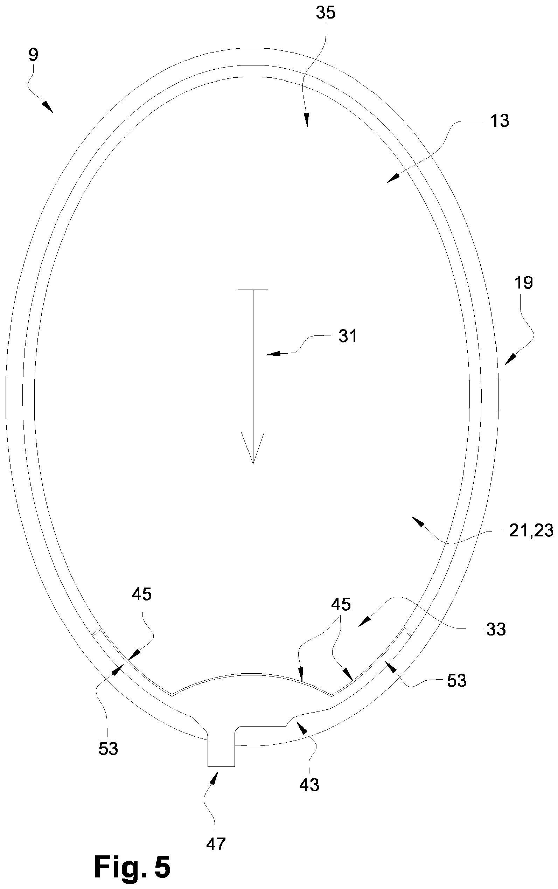

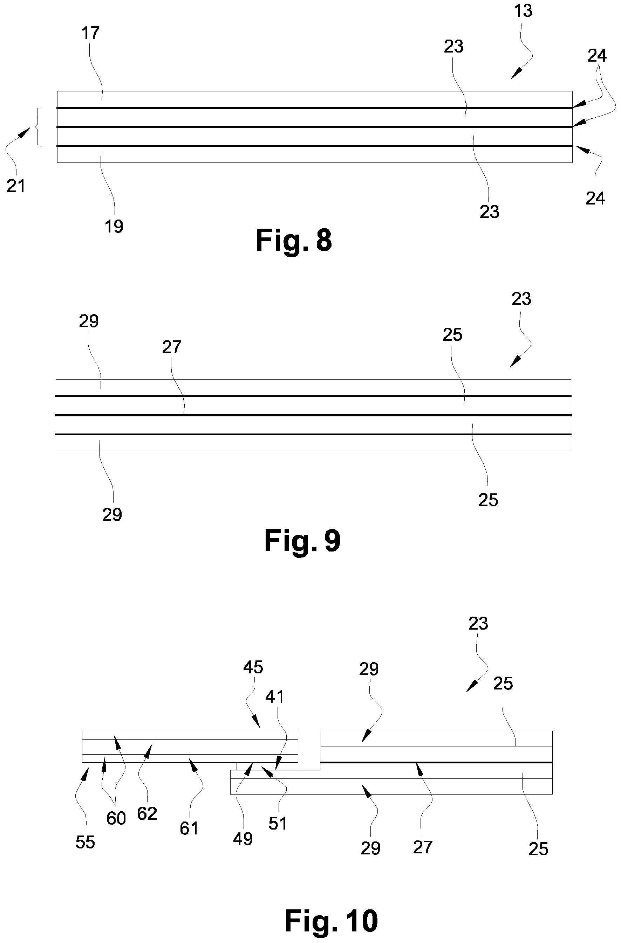

Comme illustré aux figures 5 et 8, la couche interne 21 comprend au moins un film polarisable 23. Selon le premier mode de réalisation, la couche interne 21 comprend deux films polarisables 23 superposés. Une couche de colle 24 transparente assure la solidarisation entre les deux films polarisables 23

Chaque film polarisable 23 constitue une épaisseur de la couche interne 21 et s'étend en regard de faces extérieures 15 du hublot d'habillage intérieur 9.

Comme illustré à la figure 9, Chaque film polarisable 23 comprend deux couches conductrices 25 transparentes entre lesquelles se trouve une couche d'un matériau polarisable 27. Les couches conductrices 25 s'étendent également en regard des faces extérieures 15 du hublot d'habillage intérieur 9.

Selon le premier mode de réalisation, la couche de matériau polarisable 27 est de type « suspended particule device ». La couche de matériau polarisable 27 est agencée pour changer de degré d'opacité en fonction de l'alimentation électrique imposé audit matériau par les deux couches conductrices 25 l'entourant. L'opacité est obtenue par une polarisation dudit matériau, la polarisation variant en fonction de l'alimentation électrique soumise aux deux couches conductrices 25.

Les couches conductrices 25 sont entourées par des couches isolantes 29 transparentes. Selon le premier mode de réalisation, les couches isolantes 29 transparentes sont en polyamide.

Comme illustré aux figures 1 à 6, la forme ovoïde du hublot d'habillage intérieur 9 présente une direction principale d'extension 31. On définit une première 33 et une deuxième extrémité 35 du hublot d'habillage intérieur 9 selon la direction principale d'extension 31.

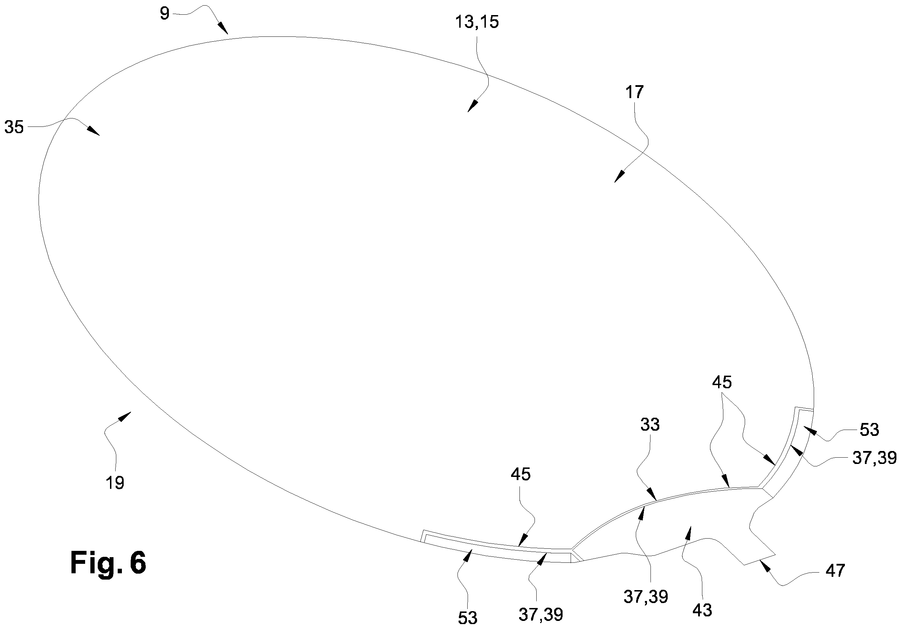

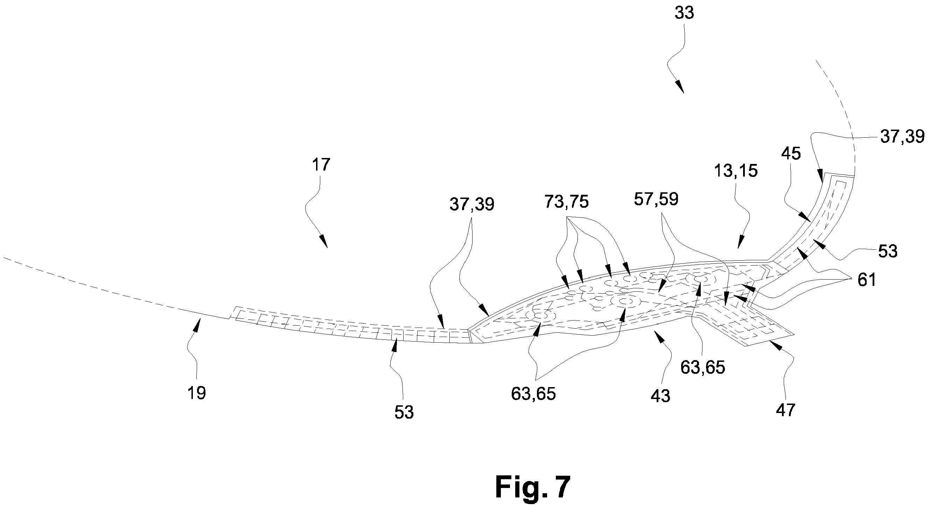

A la première extrémité 33 du hublot d'habillage intérieur 9, la couche interne 21 comprennent une station de connexion 37, comme illustré aux figures 6 et 7. La station de connexion 37 comprend un emplacement de connexion 39 ménagée dans l'épaisseur de la couche interne 21.

La station de connexion 37 comprend des zones de contact 41 destinées à l'alimentation électrique des couches conductrices 25. Chaque couche conductrice 25 comprend une zone de contact 41.

Comme illustré aux figures 6 et 7, le hublot d'habillage intérieur 9 comprend en outre un sous-ensemble de contrôle 43. Le sous-ensemble de contrôle 43 est rapporté à la première extrémité 33 du hublot d'habillage intérieur 9.

L'anneau de maintien 11 est en regard du sous-ensemble de contrôle 43 de telle sorte que l'anneau de maintien 11 réalise un capotage du sous-ensemble de contrôle 43 par rapport à l'intérieur de l'aéronef.

Le sous-ensemble de contrôle 43 comprend un premier organe de liaison électrique 45 et un deuxième organe de liaison électrique 47. Le premier 45 et le deuxième 47 organe de liaison sont réalisés en matériau flexible.

Le sous-ensemble de contrôle 43 se situe entre les parois 17, 19, à l'exception du deuxième organe de liaison électrique 47 qui s'étend vers l'extérieur du hublot d'habillage intérieur 9.

Le premier organe de liaison électrique 45 présente une forme extérieure complémentaire à l'emplacement de connexion 39. Le premier organe de liaison électrique 45 est solidarisé à la station d'accueil par collage.

Comme illustré à la figure 10, le premier organe de connexion électrique 45 comprend des bornes de connexion 49 aux zones de contact 41 de la station de connexion 37. Le collage 51 permet à la fois de solidariser le sous-ensemble de contrôle 43 à la station de connexion 37 et à relier électriquement les zones de contact 41 aux bornes de connexion 49. La figure 10 illustre un collage 51 entre une couche conductrice 25 et une borne de connexion 49 du premier organe de connexion électrique 45.

Comme illustré aux figures 6 et 7, le premier organe de connexion électrique 45 comprend deux bandes latérales 53.

Le second organe de connexion électrique 47 s'étend en dehors de la zone en regard des parois 17, 19 contrairement au reste du sous-ensemble de contrôle 43, comme illustré à la figure 7. Le second organe de connexion 47 s'étend sensiblement parallèlement aux faces extérieures 15 du panneau 13. Le second organe de connexion 47 comprend un élément de connexion à un circuit d'alimentation électrique.

Comme illustré à la figure 7, le sous-ensemble de contrôle 43 comprend un circuit électrique 55 flexible. Le un circuit électrique 55 comprend en outre une unité de traitement 57. Selon le premier mode de réalisation, l'unité de traitement 57 est un microprocesseur. Le microprocesseur est ménagé dans le circuit électrique 55 flexible.

Le sous-ensemble de contrôle 43 comprend un dispositif d'application d'une tension 59 aux bornes du premier organe de connexion, le dispositif étant ménagé dans le circuit électrique flexible. Le dispositif d'application de tension est relié à une alimentation électrique externe par le second organe de connexion.

Le microprocesseur et le dispositif d'application de tension 59 sont connectés, le microprocesseur étant agencé pour piloter le dispositif d'application de tension 59 de manière à ce que le dispositif d'application de tension 59 fasse varier l'alimentation électrique aux bornes 49 du premier organe de liaison électrique 45. Comme illustré à la figure 10, le dispositif d'application de tension 59 est relié électriquement au premier organe de liaison 45 par des pistes conductrices 61, les pistes conductrices 61 étant disposées dans une portion conductrice 60 du circuit électrique 55 flexible. Le circuit électrique 55 comprend également une portion insolante 62.

Le sous-ensemble de contrôle 43 comprend également des éléments de commande 63 rapportés sur le circuit électrique 55 flexible. Les éléments de commandes 63 sont reliés au microprocesseur de manière à permettre à un utilisateur de régler l'alimentation électrique des couches conductrices 25.

Les éléments de commandes 63 comprennent des touches tactiles 65 agencées pour être contrôlées par l'utilisateur à travers la première paroi 17, les touches tactiles 65 étant activées par contact sur une zone de la première face extérieure 15 en regard du bouton tactile 65. Les touches tactiles 65 comprennent des capteurs inductifs et/ou capacitifs.

Les éléments de commande 63 comprennent une première touche tactile 67 pour l'augmentation du degré d'opacité du hublot d'habillage intérieur 9, une deuxième touche tactile 69 pour la diminution dudit degré d'opacité et une troisième touche tactile 71 permettant à chaque appui d'alterner entre une opacité totale et la transparence du hublot d'habillage intérieur 9.

Le sous-ensemble de contrôle 43 comprend également des éléments de signalisation 73 rapportés sur le circuit électrique 55 flexible. Les éléments de signalisation 73 comprennent des diodes électroluminescentes 75 visibles à travers la première paroi 17, comme illustré à la figure 7.

Les diodes électroluminescentes 75 sont reliées électriquement au microprocesseur. Le microprocesseur est agencé pour piloter l'éclairage des diodes électroluminescentes 75 en fonction du degré d'opacité du hublot. Le nombre de diodes électroluminescentes 75 allumées varie en fonction du degré d'opacité du hublot d'habillage intérieur 9, plus le hublot d'habillage intérieur 9 est opaque plus le nombre de diodes électroluminescentes 75 allumées est important.

Le sous-ensemble de contrôle 43 comprend également une sérigraphie 77 disposée sur le circuit électrique 55 flexible, comme illustré à la figure 7. La sérigraphie 77 comprend des indications destinées à l'utilisateur pour spécifier l'emplacement des touches tactiles 65 et leur rôle. Des ouvertures sont ménagées dans la sérigraphie pour laisser les diodes électroluminescentes 75 apparentes.

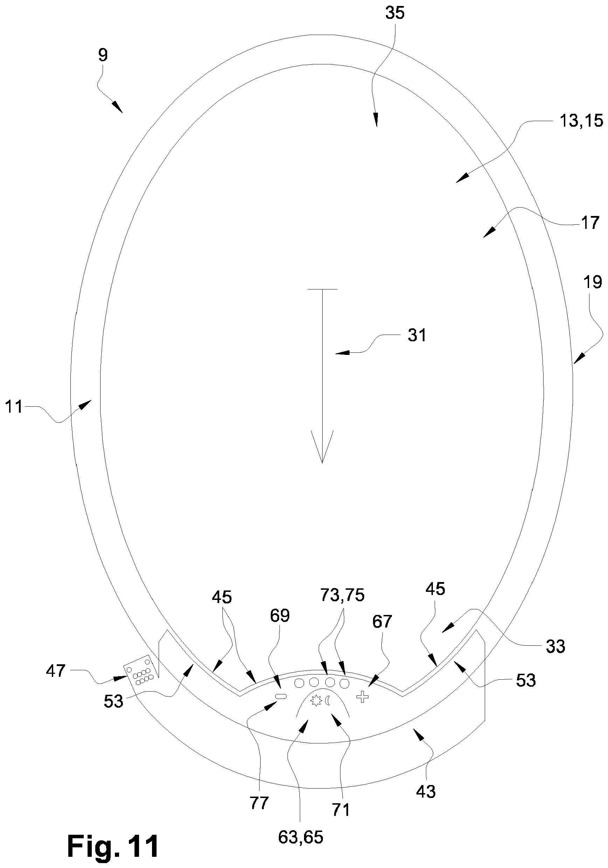

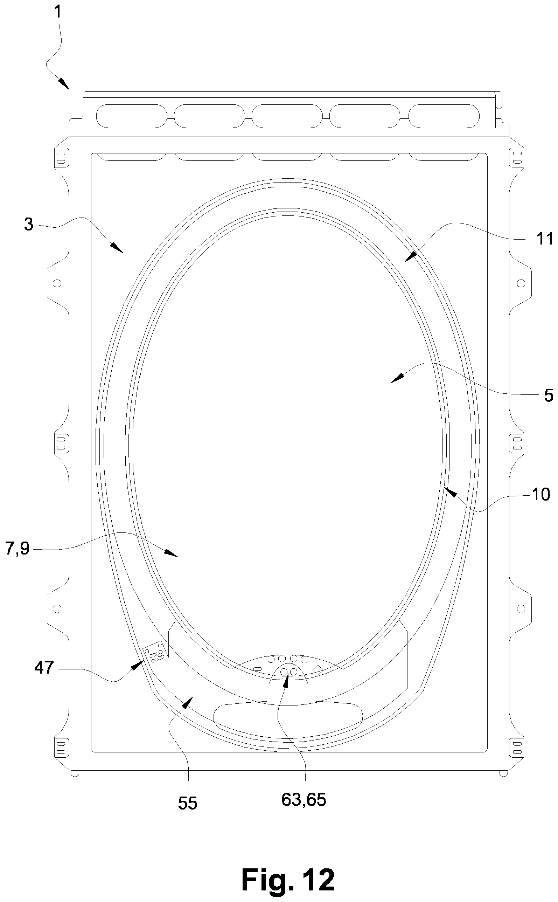

Comme illustré aux la figures 11 et 12, selon un second mode de réalisation, le circuit électrique 55 présente une portion en dehors de la zone en regard des parois 17, 19. Le circuit électronique 55 est partiellement rigide et partiellement flexible.

La portion rigide du circuit électronique comprend le deuxième organe de liaison électrique 47. La portion rigide du circuit électronique 55 comprend également l'unité de traitement 57 et le dispositif d'application de la tension 59 pour la transmission de la puissance électrique aux couches conductrices 25.

La portion flexible comprend le premier organe de liaison électrique 45, les éléments de commande 63 et les éléments de signalisation 73.

Les pistes conductrices 61 sont comprises à la fois dans la portion rigide et dans la portion flexible.

Seules les caractéristiques du second mode de réalisation différant des éléments du premier mode de réalisation sont décrites ci-dessus. Les caractéristiques identiques ne sont pas reprises.

Le hublot d'habillage intérieur 9 décrit ci-avant présente des avantages de par sa conception. Le sous-ensemble de contrôle 43 est rapporté sur le panneau 13 du hublot d'habillage intérieur 9. L'insertion du hublot d'habillage intérieur 9 dans le logement 10 de la cassette de réception 3 s'en trouve facilitée.

L'installation du hublot d'habillage intérieur 9 dans la cassette de réception 3 est rapide et simple : il suffit de positionner le hublot d'habillage intérieur 9 dans l'emplacement dédié de la cassette de réception 3, de raccorder le second organe de liaison électrique 47 à une source d'alimentation électrique et de solidariser le hublot d'habillage intérieur 9 avec l'anneau de maintien 11.

Pour les opérations de maintenance, notamment en cas de dysfonctionnement du réglage de l'opacité, le remplacement du hublot d'habillage intérieur 9 défectueux par un autre hublot d'habillage intérieur 9 s'avère également simple grâce à l'intégration du sous-ensemble de contrôle 43 dans le hublot d'habillage intérieur 9.

Le hublot d'habillage intérieur 9 est également fiable car le sous-ensemble de contrôle 43 est protégé de l'environnement extérieur par l'anneau de maintien 11.

De plus le raccordement électrique par collage du premier organe de liaison électrique 45 à la station de connexion 41 est résistant. Le risque de rupture de la connexion électrique est faible.

Comme il va de soi, l'invention ne se limite pas à la seule forme d'exécution de ce système, décrit ci-dessus à titre d'exemple, elle en embrasse au contraire toutes les variantes de réalisation.

## Revendications

1. Hublot d'habillage intérieur (9) formant un panneau (13) comprenant au moins une paroi (17, 19) translucide et au moins un film polarisable (23) rapporté sur la paroi (17, 19) et destiné à modifier le degré d'opacité du panneau (13),
le hublot d'habillage intérieur (9) comprend également un dispositif d'application d'une tension (59) au film polarisable (23), le dispositif d'application de tension (59) comprenant au moins un circuit imprimé (55) pourvu d'une portion flexible, le circuit imprimé (55) et étant relié à un circuit d'alimentation électrique,
le film polarisable (23) comprenant une pluralité de couches superposées présentant au moins deux couches conductrices (25) entourant une couche en matériau polarisable (27), les couches conductrices (25) étant reliées au dispositif d'application de tension (59) par au moins une piste conductrice (61) ;
le hublot d'habillage intérieur (9) comprenant en outre des éléments de commande (63) du dispositif d'application de tension (59) au film polarisable (23), les éléments de commandes (63) comprenant des touches tactiles (65) agencées pour être contrôlées par l'utilisateur sur une première face extérieure (15) du panneau (13) à travers la première paroi (17), les touches tactiles (65) étant activées par contact sur une zone de la première face extérieure (15) en regard du bouton tactile (65).

2. Hublot d'habillage intérieur (9) selon la revendication 1, comprenant une piste conductrice (61) reliée à une couche conductrice (25) du film polarisable (23) par collage.

3. Hublot d'habillage intérieur (9) selon l'une des revendications 1 ou 2, dans lequel le film polarisable comprend un emplacement de connexion (39) présentant une zone de contact (41) appartenant à au moins une couche conductrice.

4. Hublot d'habillage intérieur (9) selon la revendication 3 comprenant un premier organe de liaison électrique (45) présentant une forme extérieure complémentaire à l'emplacement de connexion (39), le premier organe de liaison électrique (45) étant rapporté sur le circuit imprimé (55).

5. Hublot d'habillage intérieur (9) selon l'une des revendications précédentes, dans lequel les éléments de commandes (63) sont intégrés dans la portion flexible du circuit imprimé (55).

6. Hublot d'habillage intérieur (9) selon l'une des revendications précédentes, comprenant des éléments de signalisation (73).

7. Hublot d'habillage intérieur (9) selon la revendication 6, dans lequel les éléments de signalisation (73) comprennent des éléments lumineux.

8. Hublot d'habillage intérieur (9) de signalisation selon la revendication 7, dans lequel les éléments lumineux sont pourvus de diodes électroluminescentes (75).

9. Hublot d'habillage intérieur (9) selon la revendication 8, dans lequel les diodes électroluminescentes (75) sont rapportées sur la portion flexible du circuit imprimé (55).

10. Hublot d'habillage intérieur (9) selon l'une des revendications précédentes, dans lequel la portion flexible du circuit imprimé (55) comprend une unité de traitement (57) agencée pour piloter le réglage du degré d'opacité du panneau (13).

11. Hublot d'habillage intérieur (9) selon l'une des revendications précédentes, dans lequel la portion flexible du circuit imprimé (55) s'étend en regard de la première face extérieure (15) du panneau (13).

12. Hublot d'habillage intérieur (9) selon l'une des revendications précédentes, dans lequel une portion du circuit imprimé (55) est disposée au-delà de la zone en regard de la première face extérieure (15) du panneau (13), ladite portion étant rigide et/ou flexible.

13. Hublot d'habillage intérieur (9) selon la revendication 12, dans lequel ladite portion est rigide et comprend le dispositif d'application de tension (59).

14. Système (1) de hublot polarisable comprenant une cassette de réception, et un hublot d'habillage selon l'une des revendications précédentes, la cassette de réception comprenant un logement destiné à recevoir au moins une partie du dispositif d'application d'une tension au film polarisable.

## Patentansprüche

1. Fenster zur Innenauskleidung (9), das eine Platte (13) bildet, mindestens eine durchsichtige Wand (17, 19) und mindestens einen polarisierbaren Film (23) umfassend, der auf der Wand (17, 19) aufgetragen ist, und dazu bestimmt ist, den Opazitätsgrad der Platte (13) zu ändern,
wobei das Fenster zur Innenauskleidung (9) auch eine Vorrichtung zum Anlegen einer Spannung (59) an den polarisierbaren Film (23) umfasst, wobei die Vorrichtung zum Anlegen einer Spannung (59) mindestens eine gedruckte Schaltung (55) umfasst, die mit einem flexiblen Abschnitt versehen ist, wobei die gedruckte Schaltung (55) mit einer elektrischen Versorgungsschaltung verbunden ist,
wobei der polarisierbare Film (23) eine Vielzahl von überlagerten Schichten umfasst, die mindestens zwei leitfähige Schichten (25) aufweisen, die eine Schicht aus polarisierbarem Material (27) umgeben, wobei die leitfähigen Schichten (25) durch mindestens eine leitfähige Spur (61) mit der Vorrichtung zum Anlegen einer Spannung (59) verbunden sind;
wobei das Fenster zur Innenauskleidung (9) weiter Elemente zum Steuern (63) der Vorrichtung zum Anlegen einer Spannung (59) an den polarisierbaren Film (23) umfasst, wobei die Elemente zum Steuern (63) Sensortasten (65) umfassen, die angeordnet sind, um durch den Benutzer auf einer ersten Außenseite (15) der Platte (13) durch die erste Wand (17) hindurch kontrolliert zu werden, wobei die Sensortasten (65) durch Kontakt auf einer Zone der ersten Außenseite (15) gegenüber der Sensortaste (65) aktiviert werden.

2. Fenster zur Innenauskleidung (9) nach Anspruch 1, eine leitfähige Spur (61) umfassend, die durch Verkleben mit einer leitfähigen Schicht (25) des polarisierbaren Films (23) verbunden ist.

3. Fenster zur Innenauskleidung (9) nach einem der Ansprüche 1 oder 2, wobei der polarisierbare Film eine Anschlussstelle (39) umfasst, die eine Kontaktzone (41) aufweist, die mindestens einer leitfähigen Schicht angehört.

4. Fenster zur Innenauskleidung (9) nach Anspruch 3, ein erstes elektrisches Verbindungsorgan (45) umfassend, das eine Außenform ergänzend zur Anschlussstelle (39) aufweist, wobei das erste elektrische Verbindungsorgan (45) auf der gedruckten Schaltung (55) aufgetragen ist.

5. Fenster zur Innenauskleidung (9) nach einem der vorstehenden Ansprüche, wobei die Elemente zum Steuern (63) in den flexiblen Abschnitt der gedruckten Schaltung (55) integriert sind.

6. Fenster zur Innenauskleidung (9) nach einem der vorstehenden Ansprüche, das Signalisierungselemente (73) umfasst.

7. Fenster zur Innenauskleidung (9) nach Anspruch 6, wobei die Signalisierungselemente (73) Leuchtelemente umfassen.

8. Fenster zur Innenauskleidung (9) zum Signalisieren nach Anspruch 7, wobei die Leuchtelemente mit elektrolumineszierenden Dioden (75) versehen sind.

9. Fenster zur Innenauskleidung (9) nach Anspruch 8, wobei die elektrolumineszierenden Dioden (75) auf dem flexiblen Abschnitt der gedruckten Schaltung (55) aufgetragen sind.

10. Fenster zur Innenauskleidung (9) nach einem der vorstehenden Ansprüche, wobei der flexible Abschnitt der gedruckten Schaltung (55) eine Verarbeitungseinheit (57) umfasst, die angeordnet ist, um die Einstellung des Opazitätsgrads der Platte (13) anzusteuern.

11. Fenster zur Innenauskleidung (9) nach einem der vorstehenden Ansprüche, wobei sich der flexible Abschnitt der gedruckten Schaltung (55) gegenüber der ersten Außenseite (15) der Platte (13) erstreckt.

12. Fenster zur Innenauskleidung (9) nach einem der vorstehenden Ansprüche, wobei ein Abschnitt der gedruckten Schaltung (55) jenseits der Zone gegenüber der ersten Außenseite (15) der Platte (13) angeordnet ist, wobei der Abschnitt starr und/ oder flexibel ist.

13. Fenster zur Innenauskleidung (9) nach Anspruch 12, wobei der Abschnitt starr ist, und die Vorrichtung zum Anlegen einer Spannung (59) umfasst.

14. System (1) eines polarisierbaren Fensters, umfassend eine Empfangskassette und ein Fenster zur Auskleidung nach einem der vorstehenden Ansprüche, wobei die Empfangskassette eine Aufnahme umfasst, die dazu bestimmt ist, mindestens einen Teil der Vorrichtung zum Anlegen einer Spannung an den polarisierbaren Film zu empfangen.

## Claims

1. An internal trimming porthole (9) forming a panel (13) comprising at least one translucent wall (17, 19) and at least one polarizable film (23) attached on the wall (17, 19) and intended to modify the degree of opacity of the panel (13),
the internal trimming porthole (9) also comprises a device for applying a voltage (59) to the polarizable film (23), the device for applying a voltage (59) comprising at least one printed circuit (55) provided with a flexible portion, the printed circuit (55) being connected to a power supply circuit,
the polarizable film (23) comprising a plurality of superimposed layers having at least two conductive layers (25) surrounding a layer made of a polarizable material (27), the conductive layers (25) being connected to the device for applying a voltage (59) by at least one conductive track (61);
the internal trimming porthole (9) further comprising control elements (63) of the device for applying a voltage (59) to the polarizable film (23), the control elements (63) comprising tactile keys (65) arranged to be monitored by the user on a first external face (15) of the panel (13) through the first wall (17), the tactile keys (65) being activated by contact on an area of the first external face (15) opposite to the tactile button (65).

2. The internal trimming porthole (9) according to claim 1, comprising a conductive track (61) connected by bonding to a conductive layer (25) of the polarizable film (23).

3. The internal trimming porthole (9) according to any of claims 1 or 2, wherein the polarizable film comprises a connecting location (39) having a contact area (41) belonging to at least one conductive layer.

4. The internal trimming porthole (9) according to claim 3 comprising a first electrical connecting member (45) having an external shape complementary to the connecting location (39), the first electrical connecting member (45) being attached on the printed circuit (55).

5. The internal trimming porthole (9) according to any of the preceding claims, wherein the control elements (63) are integrated in the flexible portion of the printed circuit (55).

6. The internal trimming porthole (9) according to any of the preceding claims, comprising signaling elements (73).

7. The internal trimming porthole (9) according to claim 6, wherein the signaling elements (73) comprise luminous elements.

8. The internal signaling trimming porthole (9) according to claim 7, wherein the luminous elements are provided with light emitting diodes (75).

9. The internal trimming porthole (9) according to claim 8, wherein the light emitting diodes (75) are attached on the flexible portion of the printed circuit (55).

10. The internal trimming porthole (9) according to any of the preceding claims, wherein the flexible portion of the printed circuit (55) comprises a processing unit (57) arranged to pilot the adjustment of the degree of opacity of the panel (13).

11. The internal trimming porthole (9) according to any of the preceding claims, wherein the flexible portion of the printed circuit (55) extends opposite to the first external face (15) of the panel (13).

12. The internal trimming porthole (9) according to any of the preceding claims, wherein a portion of the printed circuit (55) is disposed beyond the area opposite to the first external face (15) of the panel (13), said portion being a rigid and/or flexible portion.

13. The internal trimming porthole (9) according to claim 12, wherein said portion is rigid and comprises the device for applying a voltage (59).

14. A polarizable porthole system (1) comprising a receiving cassette, and a trimming porthole according to any of the preceding claims, the receiving cassette comprising a housing intended to receive at least one portion of the device for applying a voltage to the polarizable film.
